# EUROPÄISCHE PATENTSCHRIFT

(11) **EP 1 008 229 B1**
(45) Veröffentlichungstag und Bekanntmachung des Hinweises auf die Patenterteilung: **24.07.2002**
(21) Anmeldenummer: 98949917.3
(22) Anmeldetag: 19.08.1998
(51) Int. Cl.: H02K 7/102, H02K 7/12

(54) **ELEKTROMOTOR**
ELECTRIC MOTOR
MOTEUR ELECTRIQUE

(30) Priorität: 27.08.1997 DE 19737239
(43) Veröffentlichungstag der Anmeldung: 14.06.2000
(73) Patentinhaber: ROBERT BOSCH GMBH, 70442 Stuttgart (DE)
(72) Erfinder: GÜNTHER, Klaus, D-70567 Stuttgart (DE); KIRN, Manfred, D-70567 Stuttgart (DE); HORNUNG, Friedrich, D-70565 Stuttgart (DE)
(86) Internationale Anmeldenummer: DE9802416
(87) Internationale Veröffentlichungsnummer: WO9910966

(56) Entgegenhaltungen:
- WO-A-97/09769
- DE-A- 2 401 846
- DE-A- 2 903 362
- DE-B- 1 114 573

## Beschreibung

Die Erfindung betrifft einen Elektromotor, insbesondere für ein Elektrowerkzeug, mit einem über ein Schaltmittel mit einer Spannungsversorgung verbindbaren Antriebsmittel mit den im Oberbegriff des Anspruchs 1 genannten Merkmalen.

### Stand der Technik

Elektrowerkzeuge sind bekannt. Diese weisen einen Elektromotor auf, dessen Antriebswelle einen Werkzeugträger, beispielsweise ein Spannelement zur Aufnahme von Werkzeugen, antreibt. Bekannte derartige Elektrowerkzeuge sind beispielsweise Bohrmaschinen, Winkelschleifer, Kreissägen und dergleichen. Zum Abschalten der Elektrowerkzeuge werden diese von der Spannungsversorgung, insbesondere über einen Ein-/Ausschalter getrennt. Hierbei ergeben sich nach dem Abschalten zum Teil sehr lange Auslaufzeiten aufgrund einer im rotierenden Werkzeug gespeicherten Rotationsenergie. Dies kann für einen unachtsamen Benutzer zu gefährlichen Situationen führen. Neben der gegebenen Verletzungsgefahr kann das Elektrowerkzeug erst nach einer längeren Pause, bis das Werkzeug zum Stillstand gelangt ist, unbeobachtet abgelegt werden.

Um die Auslaufzeiten der Elektrowerkzeuge zu verringern, ist bekannt, diesen eine Bremseinrichtung zuzuordnen. Neben einer elektrodynamischen Bremse, bei der der Elektromotor nach Ausschalten des Elektrowerkzeuges von einem motorischen in einen generatorischen Betrieb umgeschaltet wird, sind mechanisch wirkende Bremseinrichtungen bekannt. Bei bekannten Elektrowerkzeugen sind hierzu auf einer Antriebswelle des Elektromotors separate Bremsscheiben angeordnet, gegen die bei Trennung des Elektromotors von der Spannungsversorgung ein ringförmiger Bremsbelag drückt. Bei dieser Lösung ist nachteilig, daß für die Anordnung der Bremsscheibe und des Bremsbelages ein zusätzlicher Einbauraum im Elektrowerkzeug zur Verfügung stehen muß.

Aus der DE 2 401 846 ist eine Bremseinrichtung für Motoren bekannt, bei denen in ein Stator integrierter Bremsklotz durch die Kraft eines Federelementes gegen den Stator drückbar ist. Eine Lösekraft auf den Bremsklotz ist mittels eines Magnetfeldes aufbringbar.

Aus der DE 1 114 573 A ist eine Bremsvorrichtung für einen Elektromotor bekannt, bei der aktive Teile des magnetischen Kreises des Stators Teile der Bremsvorrichtung bilden und diese in den magnetischen Kreis der Statorfeldpole eingebettet sind.

Aus der WO 97/09769 A1 ist eine weitere Bremseinrichtung für Elektromotoren bekannt, bei der in den Stator mechanisch wirkende Bremseinrichtungen integriert sind.

### Vorteile der Erfindung

Der erfindungsgemäße Elektromotor mit den im Anspruch 1 genannten Merkmalen bietet den Vorteil, daß in einfacher Weise eine mechanisch wirkende Bremseinrichtung integriert werden kann, die keinen zusätzlichen Einbauraum benötigt und das Betriebsverhalten des Elektromotors nicht beeinflußt. Dadurch, daß im Bereich des Schlitzes wenigstens eine Kurzschlußwindung angeordnet ist, läßt sich die elektromagnetische Erzeugung der Lösekraft auch beim des Universalmotors mit Wechselspannung gewährleisten. Die Kurzschlußwindung führt dazu, daß während der Nulldurchgänge der Wechselspannung der sich ergebene Abfall des magnetischen Flusses kompensiert wird. Somit wird ein Flattern des zur Abbremsung des Rotors radial verlagerbaren magnetisierbaren Teilen vermieden.

Bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine teilweise Perspektivansicht eines Universalmotors, bei dem aus Gründen der Übersichtlichkeit keine Kurzschlußwindung und keine Spule dargestellt ist;
- Figur 2: eine teilweise aufgeschnittene Ansicht des Universalmotors gemäß Figur 1;
- Figur 3: eine Perspektivansicht einer Bremsbacke;
- Figur 4: eine Perspektivansicht eines Statorpaketes;
- Figur 5: eine Perspektivansicht einer Bremsbacke;
- Figur 6: eine Perspektivansicht eines Statorpaketes;
- Figur 7: eine Schaltungsanordnung für eine Bremseinrichtung eines Universalmotors und
- Figur 8: eine schematische Perspektivansicht einer Bremsbacke.

### Beschreibung der Ausführungsbeispiele

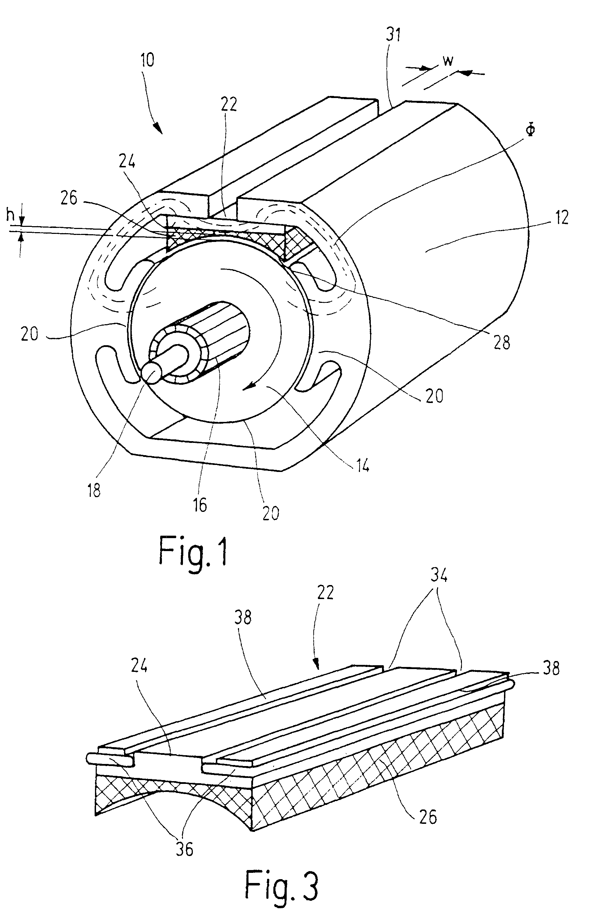

In Figur 1 ist der Aufbau eines Universalmotors 10 in einer schematischen Perspektivansicht gezeigt. Innerhalb eines Stators 12 ist über nicht dargestellte Lager ein Anker 14 rotationssymmetrisch gelagert. Der Anker 14 trägt nicht näher dargestellte Ankerwicklungen, die in Nuten des Ankers angeordnet sind und über einen Kommutator 16 elektrisch angeschlossen sind. Der Anker 14 ist auf einer Antriebswelle 18 des Universalmotors 10 angeordnet, die zum Abgreifen einer Drehbewegung dient. Der Stator 12 bildet Polschuhe 20 aus, die im einzelnen nicht dargestellte Wicklungen tragen. Aufbau und Wirkungsweise von Universalmotoren sind allgemein bekannt, so daß hierauf im Rahmen der Beschreibung nicht näher eingegangen werden soll. Derartige Universalmotoren 10 werden beispielsweise zum Antreiben von Elektrowerkzeugen genutzt, wobei die Antriebswelle 18 einen Werkzeugträger zur Aufnahme eines Werkzeuges antreibt. Hierzu wird der Universalmotor 10 mit einer Versorgungsspannung verbunden, so daß der Anker 14 in bekannter Weise in Rotation versetzt wird. Nach Abschalten der Versorgungsspannung rotiert der Anker 14 infolge der im Anker 14 beziehungsweise einem an der Antriebswelle 18 angebrachten Werkzeug, beispielsweise dem Sägeblatt einer Kreissäge, dem Schleifblatt eines Winkelschleifers und dergleichen, gespeicherten Rotationsenergie weiter. Um nach Abschalten der Versorgungsspannung ein möglichst umgehendes Abbremsen des Ankers 14 und somit des Werkzeuges zu erreichen, sind die nachfolgend näher erläuterten mechanisch wirkenden Bremseinrichtungen vorgesehen.

Gemäß dem in Figur 1 gezeigten Ausführungsbeispiel ist eine Bremsbacke 22 vorgesehen, die aus einer Grundplatte 24 sowie einem Bremsbelag 26 besteht. Die axiale Erstreckung der Bremsbacke 22 entspricht der axialen Erstreckung des Ankers 14. Eine Bremsfläche 28 des Bremsbelages 26 verläuft auf einer Krümmung, die der Krümmung einer Oberfläche 30 des Ankers 14 entspricht. Im Bereich der Bremsbacke 22 weist der Stator 12 einen axial verlaufenden Schlitz 31 auf, dessen Spaltweite w größer ist als zirka der doppelte Hub h zwischen der Bremsfläche 28 der Bremsbacke 22 und der Oberfläche 30 des Ankers 14. Der Hub h beträgt beispielsweise 0,5 bis 1 mm.

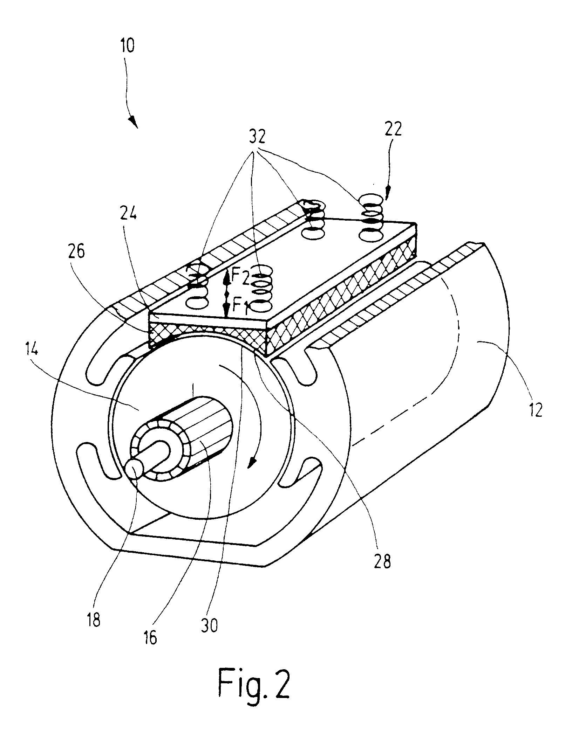

In der in Figur 2 gezeigten, teilweise aufgeschnittenen Darstellung des Universalmotors 10 wird deutlich, daß die Grundplatte 24 wenigstens ein, im gezeigten Beispiel vier Federelemente 32 aufweist, die sich an dem Stator 12 abstützen. Hierdurch wird erreicht, daß über die Federelemente 32 die Bremsbacke 22 mit ihrer Bremsfläche 28 gegen die Oberfläche 30 des Ankers 14 gedrückt wird und hierdurch ein Bremsmoment erzeugt. Dieses Bremsmoment ist proportional der Stärke der von den Federelementen 32 aufgebrachten Federkräfte. Diese den Federkräften entsprechende Bremskraft ist unabhängig von den weiteren konstruktiven Merkmalen beziehungsweise Einsatzbedingungen des Universalmotors 10, so daß diese während des zu erläuternden Abbremsens des Rotors 14 konstant ist. Hierdurch ergibt sich ein im wesentlichen sanfter, ruckfreier und gleichmäßiger Bremsverlauf. Entsprechend der gewählten Federelemente 32 ist über deren Federkraft die Bremszeit einstellbar. Hierdurch funktioniert die Bremseinrichtung völlig unabhängig vom vorhergehenden Betriebszustand des Universalmotors 10 und wirkt sofort nach Unterbrechung der Spannungsversorgung des Universalmotors 10. Somit wird beispielsweise sichergestellt, daß auch bei einer zufälligen Unterbrechung der Spannungsversorgung die Bremswirkung der Bremseinrichtung sofort einsetzt.

Im gezeigten Beispiel wird davon ausgegangen, daß eine Bremsbacke 22 vorgesehen ist. Nach weiteren Ausführungsbeispielen kann vorgesehen sein, daß zwei oder mehrere Bremsbacken 22 vorgesehen sind, die beispielsweise diametral gegenüberliegend zum Anker 14 angeordnet sind.

Um beim bestimmungsgemäßen Einsatz des Universalmotors 10 die Funktion der Bremseinrichtung zu unterbrechen, muß diese mit einer Lösekraft F₂ beaufschlagt werden, die größer ist als die Bremskraft F₁, die über die Federelemente 32 aufgebracht wird, da andernfalls die Bremsbacke 22 ständig am Anker 14 mitschleifen würde. Die Bremskraft F₁ wirkt radial auf den Anker 14 und die Lösekraft F₂ mit einem um 180° versetzten Richtungsvektor ebenfalls radial. Um die Funktion der Bremseinrichtung zu gewährleisten, muß die Lösekraft F₂ beim Verbinden des Universalmotors 10 mit der Versorgungsspannung wirksam werden, um die Bremskraft F₁ zu kompensieren. Bei Abschalten der Versorgungsspannung muß die Lösekraft F₂ unmittelbar unwirksam werden, so daß die Bremskraft F₁ auf den Anker 14 wirken kann. Die Lösekraft F₂ kann nach verschiedenen Ausführungsbeispielen entweder elektromagnetisch, mechanisch oder hydraulisch erzeugt werden.

Bei dem in Figur 1 und 2 gezeigtem Ausführungsbeispiel wird die Lösekraft F₂ elektromagnetisch erzeugt. Im ausgeschalteten Zustand des Universalmotors 10 liegt die Bremsbacke 22 am Anker 14 an. Hierdurch ergibt sich zwischen dem Stator 12 und der Grundplatte 24 jeweils ein Luftspalt, der dem Hub h entspricht. Da die Weite w des Schlitzes 31 größer als zirka der doppelte Hub h ist, ist die Gesamtlänge des Luftspaltes, der sich zwischen dem Stator 12 und der Grundplatte 24 ergibt, kleiner als die Weite w. Hierdurch wird erreicht, daß sich das bei eingeschaltetem Universalmotor 10 aufbauende Magnetfeld B (in Figur 1 schematisch angedeutet) im wesentlichen über die Grundplatte 24 der Bremsbacke 22 schließt. Aufgrund des sich aufbauenden magnetischen Flusses Φ wird eine magnetische Kraft erzeugt, die als Lösekraft F₂ wirkt, und die größer ist als die Bremskraft F₁ der Federelemente 32. Hierdurch wird die Bremsbacke 22 mit ihrer Grundplatte 24 gegen den Stator 12 gezogen, und die Bremsbacke 22 vom Anker 14 gelöst.

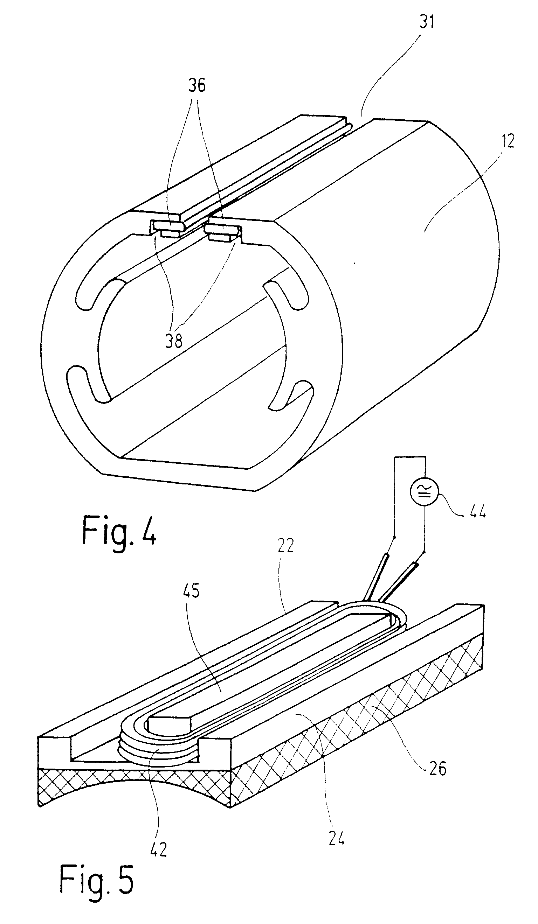

Um die elektromagnetische Erzeugung der Lösekraft F₂ auch beim Betrieb des Universalmotors 10 mit Wechselspannung zu gewährleisten, ist es erforderlich, die sich während der Nulldurchgänge der Wechselspannung ergebende Abfall des magnetischen Flusses Φ zu kompensieren. Ohne Kompensation würden die Bremsbacken 22 zum Flattern neigen. Hierzu ist gemäß Figur 3 vorgesehen, die Grundplatte 24 der Bremsbacke 22 mit axial verlaufenden Nuten 34 zu versehen, in die Kurzschlußwindungen 36 eingebracht sind. Die Kurzschlußwindungen 36 umfassen hierbei Abschnitte 38 der Grundplatte 24, deren Gesamtfläche zirka der halben Grundfläche der Grundplatte 24 abzüglich der Überdeckungsfläche mit dem Schlitz 31 entspricht. Durch die Kurzschlußwindungen wird in an sich bekannter Weise der von der Kurzschlußwindung umfaßte Teilfluß phasenverschoben. Die Summe beider Teilflüsse wird zu keinem Zeitpunkt gleich Null, was ein Abfallen, Bremsbacke 22 im Bereich des Nulldurchganges verhindert.

Die in Figur 3 gezeigte Bremsbacke 22 besitzt ferner, die hier aus Gründen der Übersichtlichkeit nicht dargestellten, Federelemente 32.

Figur 4 zeigt eine weitere Möglichkeit, die Kurzschlußwindungen 36 zu integrieren. Hierzu weist der Stator 12 parallel zum Schlitz 31 sich axial erstreckende Nuten 38 auf, die in Richtung des Ankers 14 offen sind. Diese Nuten 38 dienen der Aufnahme der Kurzschlußwindungen 36. Auch hier beträgt die von den Kurzschlußwindungen umfaßte Fläche die halbe Fläche der Grundplatte 24 abzüglich der Überdeckungsfläche der Grundplatte 24 mit dem Schlitz 31.

Es ist bekannt, Universalmotoren 10, beispielsweise bei Elektrowerkzeugen, mit einer Ansteuerelektronik zu kombinieren, über die beispielsweise eine Drehzahlregelung erfolgen kann. Hierzu wird in der Regel eine Phasenanschnittssteuerung verwendet, die zum Entstehen von "Lücken" in der Versorgungsspannung, und somit im Magnetfluß, führen. Um in diesem Fall auch in den Spannungsphasen eine größere Lösekraft F₂ als die Bremskraft F₁ zu erzielen, kann die in Figur 5 gezeigte Ausgestaltung der Bremsbacke 22 verwendet werden. Hierzu sind in die Grundplatte 24 axial verlaufende Nuten 40 eingebracht, die der Aufnahme einer Spulenwicklung 42 dienen. Die Nuten 40 sind derart eingebracht, daß zwischen den Nuten 40 ein Kern 45 gebildet ist, um den die Spulenwicklung 42 liegt. Die Spule 42 ist mit einer Spannungsquelle 44 verbunden, die beispielsweise eine Gleichspannungsquelle oder eine Wechselspannungsquelle ohne Phasenanschnitt ist. Hierdurch wird erreicht, daß in der Grundplatte 24 ein Magnetfeld erzeugt wird, das die Bremsbacke 22 gegen den Stator 12 zieht und somit den Anker 14 freigibt.

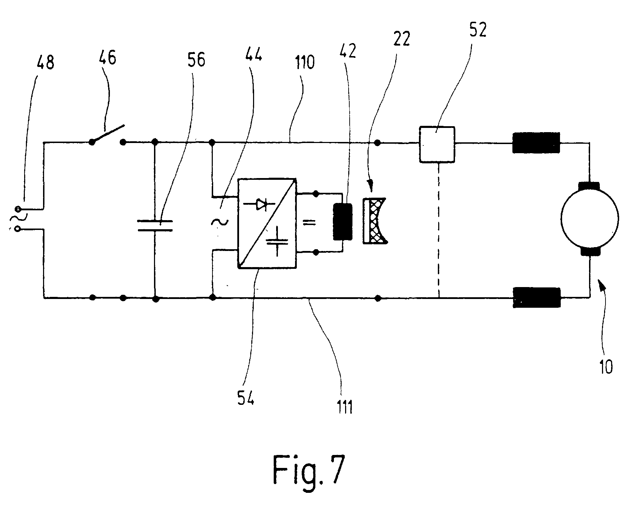

Eine mögliche Schaltungsvariante ist in der in Figur 7 gezeigten Schaltungsanordnung dargestellt. Der Universalmotor 10 ist über einen Ein-/Ausschalter 46 mit einer Versorgungsspannungsquelle 48 verbindbar. Zur Ansteuerung des Motors 10 (Figur 1) ist eine Ansteuerelektronik 52 vorgesehen, die beispielsweise über eine Phasenanschnittssteuerung eine Drehzahlregelung des Universalmotors 10 gestattet. Die hier lediglich schematisch angedeutete Bremsbacke 22 ist mit der Spule 42 versehen, die über die Spannungsquelle 44 ansteuerbar ist. Die Spannungsquelle 44 umfaßt eine Gleichrichtereinheit 54, die aus der Wechselspannung der Versorgungsspannungsquelle 48 eine Gleichspannung zur Beaufschlagung der Spule 42 erzeugt. Ferner ist ein Entstörkondensator 56 vorgesehen.

Durch die in Figur 7 gezeigte Schaltungsanordnung wird erreicht, daß die Spule 42 mit einer Spannung versorgt wird, die nach dem Ein-/Ausschalter 46 und vor der Ansteuerelektronik 52 in maschineninternen Spannungssträngen 110 und 111 abgegriffen wird. Hierdurch wird sichergestellt, daß mit Einschalten des Universalmotors 10 die Lösekraft F₂ wirkt, und diese nicht durch die phasenangeschnittene Spannung des Universalmotors 10 beeinflußt wird. Es wird somit sichergestellt, daß mit Einschalten des Universalmotors 10 sofort die Lösekraft F₂ die Bremskraft F₁ überlagert und aufhebt, und bei Ausschalten des Universalmotors 10 die Lösekraft F₂ sofort zu Null wird, so daß die Bremskraft F₁ zur radialen Verlagerung der Bremsbacke 22 auf den Anker 14 führt.

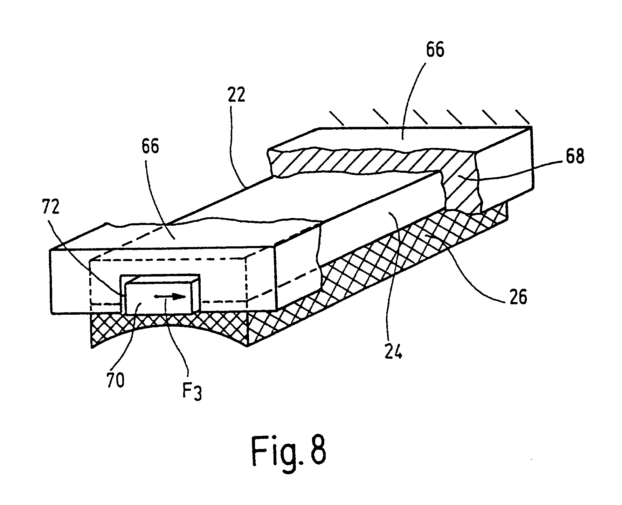

Bei Aktivierung der Bremseinrichtung, daß heißt, bei anliegender Bremsbacke 22 am drehenden Anker 14 wird auf die Bremsbacke 22 eine Tangentialkraft F₃ ausgeübt (Figur 8). Diese wirkt in Drehrichtung des Ankers 14. Um die Tangentialkraft F₃ aufzufangen, kann vorgesehen sein, in ein Gehäuse 66 des Universalmotors 10 beidseitig des Stators 12 Ausnehmungen 68 vorzusehen, in die die Bremsbacke 22 zumindest mit entsprechend axial verlängerter Grundplatte 24 eingreifen kann. Eine weitere Möglichkeit besteht darin, die Grundplatte 24 mit axial verlaufenden Vorsprüngen 70 zu versehen, die in einer entsprechend angepaßte Ausnehmung 72 eingreift. Die auftretende Tangentialkraft F₃ wird somit durch das Gehäuse 66 aufgefangen.

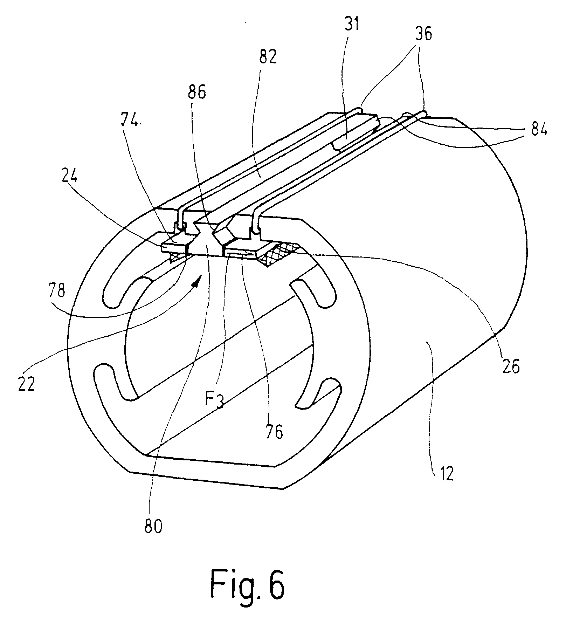

Eine weitere Möglichkeit, die Tangentialkraft F₃ abzufangen, zeigt das in Figur 6 gezeigte Ausführungsbeispiel. Hierbei ist die Grundplatte 24 der Bremsbacke 22 axial über den Stator 12 hinaus verlängert. In dem verlängerten Bereich 74 sind in den axialen Stirnseiten 76 der Grundplatte 24 randoffene Einschnitte 78 vorgesehen. In diese Einschnitte 78 greifen radial verlaufende Nasen 80 eines Halteelementes 82 ein. Das Halteelement 82 besteht aus einem nichtmagnetisierbaren Material, beispielsweise aus Kunststoff. Das Halteelement 82 ist in den Schlitz 31 formschlüssig eingesetzt. Hierzu können die einander gegenüberliegenden Stirnseiten 84 des Stators 12 einen konischen Verlauf haben, die in korrespondierende Axialnuten 86 des Halteelementes 82 eingreifen. Durch die gefundene Anordnung wird erreicht, daß über die in die Einschnitte 78 eingreifenden Nasen 80 die tangentiale Kraft F₃ abgefangen werden kann, während die radiale Hubbewegung der Bremsbacke 22 möglich ist. Das Halteelement 82 dient gleichzeitig in vorteilhafter Weise als Distanzhalter für den geschlitzten Stator 12.

Zum Anordnen der Federelemente 32 - in Figur 6 nicht dargestellt - kann vorgesehen sein, daß das Halteelement 82 in Richtung der Bremsbacke 22 offene Sacklöcher aufweist, in die die Federelemente 32 eingreifen können. Hierdurch wird erreicht, daß der Federweg der Federelemente 32, gegenüber einer Abstützung an der Innenseite des Stators 12, verlängert werden kann. Hiermit lassen sich weichere Federcharakteristiken und ein entsprechend angepaßtes Bremsverhalten erreichen.

Insgesamt wird deutlich, daß mittels einfacher mechanischer und/oder elektrischer Bestandteile eine mechanisch wirkende Bremseinrichtung geschaffen werden kann, die insbesondere keinen zusätzlichen Einbauraum innerhalb eines den Universalmotor aufweisenden Elektrowerkzeuges benötigt. Durch die gefundene Lösung werden Doppelfunktionen des Ankers 14, einerseits als drehmomenterzeugendes Element und als Bremselement, erreicht. Die einzelnen Teile der mechanisch wirkenden Bremseinrichtung können durch einfache Herstellungsschritte, beispielsweise Stanzen, Bohren, Spritzgießen und so weiter, erzeugt werden und sind innerhalb des Fertigungsprozesses des Universalmotors 10 leicht zu integrieren und können als Ersatz- beziehungsweise Verschleißteile leicht ausgewechselt werden.

## Patentansprüche

1. Elektromotor, insbesondere für ein Elektrowerkzeug, mit einem über ein Schaltmittel mit einer Spannungsversorgung verbindbaren Antriebsmittel und einer mechanisch wirkenden Bremseinrichtung zum Abbremsen der Antriebswelle bei Trennung des Elektromotors von der Spannungsversorgung, wobei ein der Drehmomenterzeugung dienender Rotor (Anker 14) des Elektromotors (10) bei Abschalten der Versorgungsspannung (48) mit einer mechanischen Bremskraft (F₁) beaufschlagbar ist und die Bremskraft (F₁) durch wenigstens ein magnetisierbares, radial verlagerbares Teil (22) aufgebracht wird, daß mit einer der Bremskraft (F₁) entgegengerichteten elektromagnetischen Lösekraft (F₂) beaufschlagbar ist, wobei die Lösekraft (F₂) größer als die Bremskraft (F1) ist, und das Teil einen axialen Schlitz (31) des Stators (12) übergreift, **dadurch gekennzeichnet, daß** an dem radial verlagerbaren Teil (22) oder an dem Stator (12) im Bereich des Schlitzes (31) wenigstens eine Kurzschlußwindung (36) angeordnet ist, oder dass in dem radial verlagerbarn Teil (22) eine Spule (42) integriert ist, die mit einer Versorgungsspannungsquelle (44) verbindbar ist, die von einer Ansteuer elektronik (52) zur Beeinflussung von Betriebsparametern des Elektromotors (10) unabhängig ist.

2. Elektromotor nach Anspruch 1, **dadurch gekennzeichnet, daß** eine im wesentlichen zylindrische Oberfläche (30) des Ankers (14) als Bremsfläche dient.

3. Elektromotor nach einem der vorhergehenden Ansprüche, **dadurch gekennzeichnet, daß** das die Bremskraft (F₁) aufbringende Teil (22) des Stators (12) radial zum Anker (14) verlagerbar ist.

4. Elektromotor nach einem der vorhergehenden Ansprüche, **dadurch gekennzeichnet, daß** das radial verlagerbare Teil (22) eine Bremsbacke (22) ist, die in den Stator (12) integriert ist.

5. Elektromotor nach einem der vorhergehenden Ansprüche, **dadurch gekennzeichnet, daß** die Bremsbacke (22) aus einer aus einem magnetisierbaren Material bestehenden Grundplatte (24) und einem Bremsbelag besteht.

6. Elektromotor nach einem der vorhergehenden Ansprüche, **dadurch gekennzeichnet, daß** eine Weite (w) des Schlitzes (31) größer ist als der doppelte Hub (h) zwischen einer Bremsfläche (28) der Bremsbacke (22) und einer Oberfläche (30) des Ankers (14).

7. Elektromotor nach einem der vorhergehenden Ansprüche, **dadurch gekennzeichnet, daß** die Bremskraft (F₁) durch wenigstens ein Federelement (32) aufgebracht wird, das sich einerseits an der Bremsbacke (22) und andererseits am Stator (12) oder einem anderen feststehenden Teil des Elektromotors (10)abstützt.

8. Elektromotor nach Anspruch 1, **dadurch gekennzeichnet, daß** die Versorgungsspannungsquelle (44) von maschineninternen Spannungssträngen (110, 111) gebildet wird, die elektrisch hinter einem Ein-/Ausschalter (46), jedoch vor der Ansteuerelektronik (52) geschaltet sind.

9. Elektromotor nach einem der vorhergehenden Ansprüche, **dadurch gekennzeichnet, daß** die Bremsbacke (22) gegen eine Auslenkung durch eine Tangentialkraft (F₃) gesichert ist.

## Claims

1. Electric motor, in particular for electric tools, having a drive means which can be connected to a voltage supply via a switching means, and having a mechanically acting braking device for braking the drive shaft when the electric motor is isolated from the supply voltage, it being possible, when the supply voltage (48) is switched off, for a mechanical braking force (F₁) to be applied to the rotor (armature 14) of the electric motor (10), this rotor serving to produce torque, and the braking force (F₁) being applied by at least one magnetizable, radially displaceable part (22), to which an electromagnetic releasing force (F₂) opposed to the braking force (F₁) can be applied, the releasing force (F₂) being greater than the braking force (F₁), and the part crossing an axial slot (31) of the stator (12), **characterized in that** at least one short-circuited winding (36) is arranged on the radially displaceable part (22) or on the stator (12) in the region of the slot (31), or **in that** a coil (42) is integrated in the radially displaceable part (22), and this coil (42) can be connected to a supply voltage source (44) which is independent of an electronic triggering unit (52) for influencing the operating parameters of the electric motor (10).

2. Electric motor according to Claim 1, **characterized in that** an essentially cylindrical surface (30) of the armature (14) serves as braking surface.

3. Electric motor according to one of the preceding claims, **characterized in that** that part (22) of the stator (12) which applies the braking force (F₁) can be displaced radially towards the armature (14).

4. Electric motor according to one of the preceding claims, **characterized in that** the radially displaceable part (22) is a brake shoe (22) which is integrated in the stator (12).

5. Electric motor according to one of the preceding claims, **characterized in that** the brake shoe (22) consists of a base plate (24), made of a magnetizable material, and a brake lining.

6. Electric motor according to one of the preceding claims, **characterized in that** a width (w) of the slot (31) is greater than twice the stroke (h) between a braking surface (28) of the brake shoe (22) and a surface (30) of the armature (14).

7. Electric motor according to one of the preceding claims, **characterized in that** the braking force (F₁) is applied by at least one spring element (32) which is supported on the one hand on the brake shoe (22) and on the other hand on the stator (12) or another fixed part of the electric motor (10).

8. Electric motor according to Claim 1, **characterized in that** the supply voltage source (44) is formed by voltage strings (110, 111) inside the machine which are electrically connected downstream of an on/off switch (46) but upstream of the electronic triggering unit (52).

9. Electric motor according to one of the preceding claims, **characterized in that** the brake shoe (22) is protected against deflection caused by a tangential force (F₃).

## Revendications

1. Moteur électrique notamment pour un outillage électroportatif comportant un moyen d'entraînement relié à la tension d'alimentation par un moyen de commutation ainsi qu'une installation de frein à effet mécanique pour freiner l'arbre d'entraînement lorsque le moteur électrique est coupé de la tension d'alimentation, dans lequel
un rotor (induit 14) du moteur électrique (10) servant à créer le couple, reçoit une force de freinage mécanique (F1) lors de la coupure de l'alimentation (48) et la force de freinage (F1) est appliquée par au moins une pièce (22) susceptible d'être aimantée, déplacée radialement, cette pièce étant sollicitée par une force de desserrage (F2) électromagnétique, dirigée à l'opposé de la force de freinage (F1),
la force de desserrage (F2) étant supérieure à la force de freinage (F1), et la pièce chevauche une fente axiale (31) du stator (12),
**caractérisé en ce que**
la pièce (22) mobile axialement ou le stator (12) comporte, au niveau de la fente (31), au moins un enroulement de court-circuit (36), ou une bobine (42) est intégrée dans la pièce (22) mobile radialement, cette bobine pouvant être reliée à une source de tension d'alimentation (44) dépendant d'un circuit électronique de commande (52) pour influencer les paramètres de fonctionnement du moteur électrique (10).

2. Moteur électrique selon la revendication 1,
**caractérisé en ce que**
la surface essentiellement cylindrique (30) de l'induit (14) constitue la surface de freinage.

3. Moteur électrique selon l'une des revendications précédentes,
**caractérisé en ce que**
la pièce (22) du stator (12) qui applique la force de freinage (F1) est mobile radialement par rapport à l'induit (14).

4. Moteur électrique selon l'une des revendications précédentes,
**caractérisé en ce que**
la pièce (22) mobile radialement est une mâchoire de frein (22) intégrée au stator (12).

5. Moteur électrique selon l'une des revendications précédentes,
**caractérisé en ce que**
la mâchoire de frein (22) est formée d'une plaque de base (24) en une matière susceptible d'être aimantée et d'une garniture de frein.

6. Moteur électrique selon l'une des revendications précédentes,
**caractérisé en ce qu'**
une largeur (w) de la fente (31) est supérieure à la double course (h) entre une surface de freinage (28) de la mâchoire de frein (22) et la surface supérieure (30) de l'induit (14).

7. Moteur électrique selon l'une des revendications précédentes,
**caractérisé en ce que**
la force de freinage (F1) est appliquée par au moins un élément de ressort (32) s'appuyant d'un côté contre la mâchoire de frein (22) et de l'autre contre le stator (12) ou une autre partie fixe du moteur électrique (10).

8. Moteur électrique selon la revendication 1,
**caractérisé en ce que**
la source de tension d'alimentation (44) est formée par les lignes d'alimentation en tension (110, 111) internes à la machine et qui se trouvent en aval de l'interrupteur marche/arrêt (46) mais en amont de l'électronique de commande (52).

9. Moteur électrique selon l'une des revendications précédentes,
**caractérisé en ce que**
la mâchoire de frein (22) est bloquée contre un débattement par une force tangentielle (F3).
